# DEMANDE DE BREVET EUROPEEN

(11) **EP 0 690 241 A1**
(43) Date de publication de la demande: **03.01.1996**
(21) Numéro de dépôt: 95420158.8
(22) Date de dépôt: 14.06.1995
(51) Int. Cl.: F16B 39/02, B62K 21/06

(54) **Ecrou pour jeu de direction de bicyclette et cycles en général**

(30) Priorité: 28.06.1994 FR 9408227
(71) Demandeur: STRONGLIGHT S.A., F-42000 Saint-Etienne (FR)
(72) Inventeur: Culaz, Patrick, F-42000 Saint Etienne (FR)
(74) Mandataire: Dupuis, François

(57) **Abrégé**

L'écrou pour jeu de direction de bicyclettes et cycles en général, est remarquable en ce qu'il présente une forme hémisphérique tronquée dans sa partie supérieure, ledit écrou étant agencé avec un alésage axial intérieur (2.2) pour le passage de la fourche, ledit écrou présentant, dans sa partie supérieure, une zone lisse (2.3) et, dans sa partie médiane, une zone filetée (2.4) non adjacente à la zone lisse, et se prolongeant par une partie inférieure formant siège (2.1) pour recevoir un jeu de rondelles coniques avec moyen de roulement, et en ce que, entre la zone lisse et la zone filetée, est prévue une gorge circulaire interne (2.5) communiquant par un ou des trous radiaux (2.6) formés dans l'épaisseur de l'écrou et débouchant extérieurement pour autoriser l'engagement d'une bague ou garniture (12) en matériau élastomère susceptible d'assurer, après mise en place, l'étanchéité de la liaison écrou-fourche et l'indéserrabilité de l'ensemble.

## Description

L'invention se rattache au secteur technique des bicyclettes et de leurs composants, et plus généralement des jeux de direction et écrous de serrage.

De manière connue, afin de permettre à l'utilisateur de guider sa bicyclette, on prévoit une liaison pivotante entre la partie antérieure du cadre et la fourche équipée de la roue avant. Le jeu de direction comprend une cuvette supérieure présentant un filetage coopérant avec la partie filetée du tube de fourche traversant la partie antérieure du cadre. Cette cuvette est établie antérieurement avec une portée conique contre laquelle vient en appui l'élément de roulement constitué par des roulements à aiguilles ou à billes. Une pièce de serrage rapportée présente à sa partie supérieure un profil conique adapté, de même inclinaison que la portée conique et vient s'engager dans la chambre intérieure de la cuvette en appui contre l'élément de roulement. La butée inférieure comprend une cuvette inférieure, un cône inférieur de serrage entre lesquels est disposé un autre système de roulement. Un contre-écrou assure le blocage de l'ensemble. Ce type de jeu de direction présente une grande fiabilité mais a pour inconvénient un montage long et peu pratique.

Pour ce faire, il a été proposé, dans le Brevet français N. 2.692.221, un dispositif de verrouillage de jeu de direction pour bicyclette dans lequel l'élément contre-écrou est agencé dans son épaisseur au-dessus de la partie formant siège de la cuvette supérieure avec une ou des ouvertures transversales autorisant la réception de bâtonnets en matériau élastomère déformable pour assurer le blocage et le verrouillage du tube de fourche. Ces bâtonnets sont disposés de sorte que leur génératrice extérieure vienne en regard de l'ouverture axiale de l'élément contre-écrou et soient ainsi écrasés et déformés après mise en place du tube de fourche. Un ou plusieurs bâtonnets sont nécessaires pour assurer la tenue et le serrage de l'ensemble. Cette disposition, bien que techniquement réalisable, est coûteuse dans sa fabrication, notamment dans les formes et logements particuliers du contre-écrou pour recevoir les bâtonnets en élastomère.

Un autre inconvénient réside dans l'insuffisance d'étanchéité lors du serrage de l'écrou sur la fourche et de l'ensemble du jeu de direction.

L'objet de l'invention a pour but de remédier à ces inconvénients en proposant une nouvelle conception d'un écrou pour jeu de direction, de fabrication simple, de mise en oeuvre rapide, et assurant les fonctions d'indéserrabilité en conditions extrêmes, et d'étanchéité dans la liaison fourche-écrou.

Ces buts et d'autres encore ressortiront bien de la suite de la description.

Selon une première caractéristique, l'écrou pour jeu de direction de bicyclettes et cycles en général, est remarquable en ce qu'il présente une forme hémisphérique tronquée dans sa partie supérieure, ledit écrou étant agencé avec un alésage axial intérieur pour le passage de la fourche, ledit écrou présentant, dans sa partie supérieure, une zone lisse et, dans sa partie médiane, une zone filetée non adjacente à la zone lisse, et se prolongeant par une partie inférieure formant siège pour recevoir un jeu de rondelles coniques avec moyen de roulement, et en ce que, entre la zone lisse et la zone filetée, est prévue une gorge circulaire interne communiquant par un ou des trous radiaux formés dans l'épaisseur de l'écrou et débouchant extérieurement pour autoriser l'engagement d'une bague ou garniture en matériau élastomère susceptible d'assurer, après mise en place, l'étanchéité de la liaison écrou-fourche et l'indéserrabilité de l'ensemble.

Ces caractéristiques et d'autres encore ressortiront bien de la suite de la description.

Pour fixer l'objet de l'invention illustré non limitativement aux figures des dessins où :

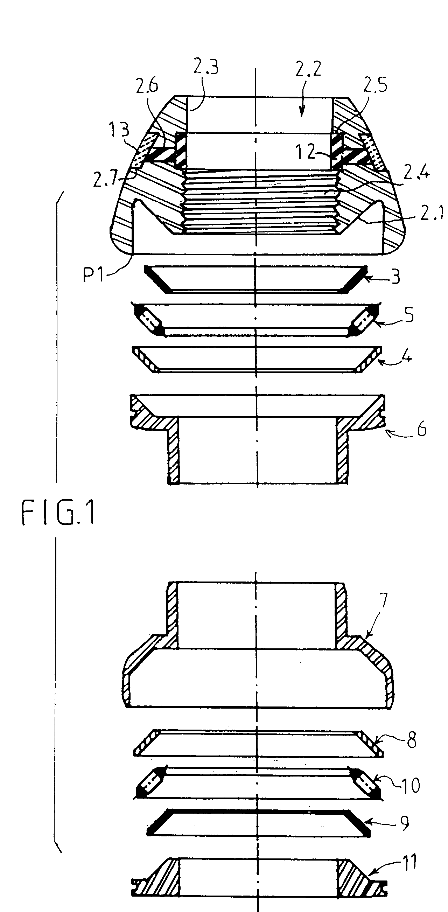

La figure 1 est une vue d'un écrou et ensemble jeu de direction de bicyclette, selon l'invention, avant montage de ses composants.

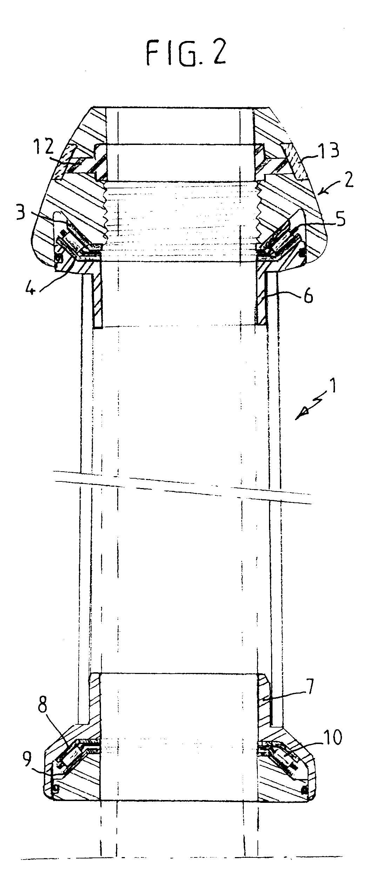

La figure 2 est une vue selon la figure 1 de l'ensemble monté.

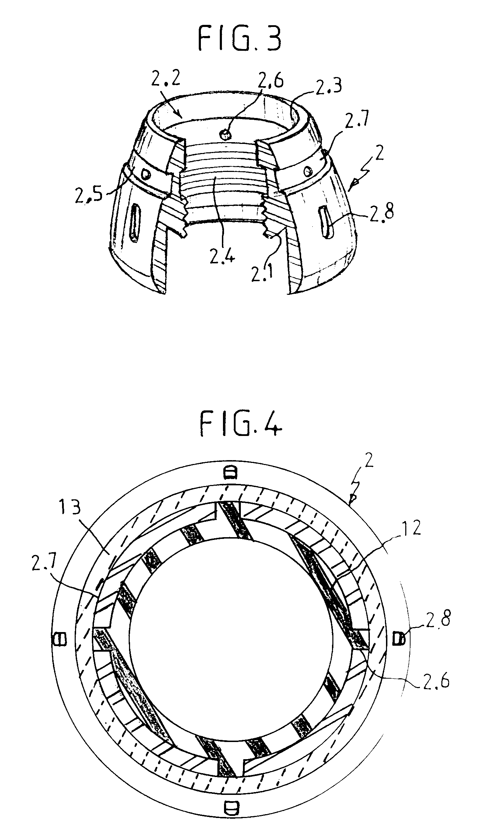

La figure 3 est une vue en perspective de l'écrou avec coupe partielle dans sa fabrication préalable.

La figure 4 est une vue en coupe transversale après insertion d'une bague ou garniture élastomère pour assurer les fonctions recherchées d'indéserrabilité et d'étanchéité.

La figure 5 est une demi-vue en coupe de l'écrou selon l'invention.

La figure 6 est une vue semblable à la figure 5 avec l'adjonction d'un parement de protection et de décoration.

Afin de rendre plus concret l'objet de l'invention, on le décrit maintenant d'une manière non limitative aux figures des dessins.

Le jeu de direction pour bicyclette est référencé dans son ensemble par (1) et comprend un écrou (2) profilé et dont les caractéristiques, selon l'invention, seront précisées par la suite. Cet écrou est agencé intérieurement, dans sa partie basse, pour former siège (2.1) en vue de recevoir des rondelles coniques (3 et 4) entre lesquelles est disposé un jeu de roulement à aiguilles (5), la rondelle inférieure (4) prenant appui sur une pièce de serrage (6). Dans sa partie inférieure, le jeu de direction comprend une butée inférieure (7) formant chapeau recevant intérieurement un jeu de rondelles coniques (8 - 9) avec roulement à aiguilles intermédiaires (10) et un cône de serrage et de blocage (11).

L'écrou selon l'invention est réalisé monobloc en présentant une forme profilée hémisphérique tronquée avec un alésage axial intérieur (2.2) pour le passage de la fourche. Cet écrou présente, dans la partie supérieure de l'alésage, une zone lisse (2.3) et, dans sa partie médiane, une zone filetée (2.4) non adjacente à ladite partie lisse. Il est prévu en effet entre elles un évidement ou gorge circulaire interne (2.5) communiquant par un ou des trous radiaux (2.6) formés dans l'épaisseur de l'écrou avec la partie extérieure de celui-ci en débouchant plus particulièrement dans une gorge ou rainure externe (2.7). L'extrémité de fond de l'écrou, dans sa partie filetée (2.4), se trouve dans un plan sensiblement supérieur au plan d'appui transversal (P1) de l'écrou en définissant une forme conique (2.1) formant siège pour le positionnement des rondelles coniques et moyens de roulement précités.

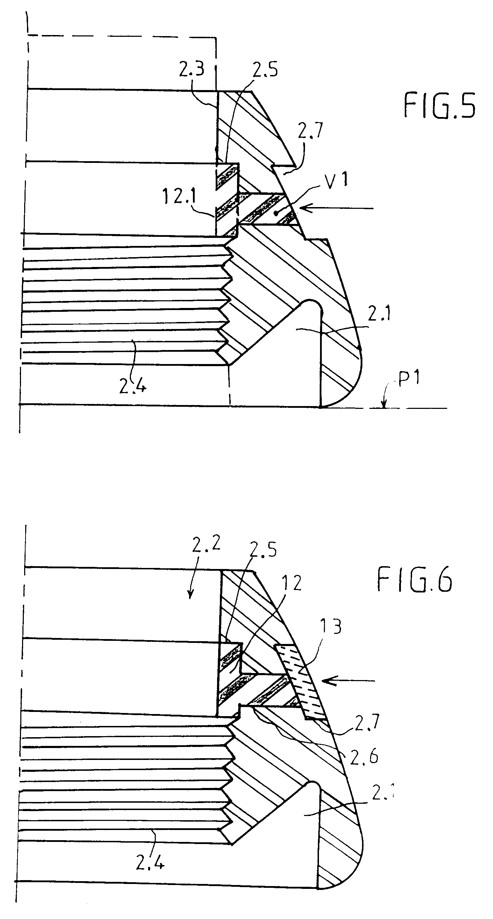

Selon l'invention, le volume (V1) défini par la gorge interne à travers les trous radiaux (2.6) est rempli d'une garniture (12) formant bague en matériau élastomère. L'insertion de cette garniture s'effectue après positionnement de l'écrou dans un moule autour d'un pivot approprié venant tangenter les parois intérieures de l'écrou. Après insertion de la garniture grâce à la fluidité de son matériau constitutif et à température appropriée, sous l'action de pression de moyens d'injection à travers les trous radiaux précités, ladite garniture se solidifie par refroidissement et vient tangenter la génératrice axiale de l'alésage intérieur de l'écrou, en étant ainsi dans l'alignement des parties lisse (2.2) et filetée (2.4). Afin d'obturer les trous radiaux remplis de matériau, on positionne sur la gorge extérieure un parement de décoration et de protection (13) qui peut être par exemple en tout matériau approprié. En variante et de préférence, la garniture (12) est susceptible de remplir également le volume défini par la rainure externe (2.7) en contribuant à réaliser ainsi une bague monobloc ayant un profil en H, la jambe externe étant inclinée pour s'adapter au profil de l'écrou comme il apparaît figure 6 des dessins.

Avant utilisation et mise en place de l'écrou de blocage, la face intérieure apparente (12.1) de la garniture (12) est lisse et l'introduction de la fourche et sa coopération avec la partie filetée intérieure de l'écrou va permettre également de former un filetage sur la garniture en matériau élastomère, la matière pénétrant dans le filetage de la fourche en assurant ainsi une parfaite tenue à étanchéité tout autour de la fourche et assurant également son indéserrabilité.

Sur sa face extérieure, l'écrou peut être aménagé avec des saillies apparentes (2.8) permettant la mise en place d'une clé pour assurer le montage du jeu de direction dans son ensemble.

Les avantages d'un tel écrou pour jeu de direction résultent dans sa facilité de fabrication, la rapidité de montage, et la meilleure étanchéité obtenue qui est assurée sur tout le pourtour de la fourche.

En cas de désagrément, la garniture peut être changée sans difficulté et l'écrou peut être réutilisé.

L'écrou selon l'invention est ainsi d'une grande hauteur et l'adjonction intermédiaire de l'élément de protection et de décoration tend à lui conférer un aspect nouveau original.

## Revendications

**-1-** Ecrou pour jeu de direction de bicyclettes et cycles en général, caractérisé en ce qu'il présente une forme hémisphérique tronquée dans sa partie supérieure, ledit écrou étant agencé avec un alésage axial intérieur (2.2) pour le passage de la fourche, ledit écrou présentant, dans sa partie supérieure, une zone lisse (2.3) et, dans sa partie médiane, une zone filetée (2.4) non adjacente à la zone lisse, et se prolongeant par une partie inférieure formant siège (2.1) pour recevoir un jeu de rondelles coniques avec moyen de roulement, et en ce que, entre la zone lisse et la zone filetée, est prévue une gorge circulaire interne (2.5) communiquant par un ou des trous radiaux (2.6) formés dans l'épaisseur de l'écrou et débouchant extérieurement pour autoriser l'engagement d'une bague ou garniture (12) en matériau élastomère susceptible d'assurer, après mise en place, l'étanchéité de la liaison écrou-fourche et l'indéserrabilité de l'ensemble.

**-2-** Ecrou selon la revendication 1, caractérisé en ce que, sur sa face extérieure apparente, l'écrou présente une gorge ou rainure externe (2.7) en communication avec les trous radiaux (2.6), ladite gorge recevant, après mise en place de la garniture en élastomère (12), un parement d'étanchéité et de décoration (13).

**-3-** Ecrou selon la revendication 1, caractérisé en ce que, sur sa face extérieure apparente, l'écrou présente une gorge ou rainure externe (2.7) en communication avec les trous radiaux (2.6), ladite garniture (12) étant susceptible de remplir également le volume défini par la rainure externe (2.7) en contribuant à réaliser ainsi une bague monobloc ayant un profil en H, la jambe externe étant inclinée pour s'adapter au profil de l'écrou.

**-4-** Ecrou selon l'une quelconque des revendications 2 et 3, caractérisé en ce que la garniture en élastomère, après mise en place et refroidissement, vient tangenter la génératrice axiale de l'alésage intérieur de l'écrou dans le plan des parties lisses et filetées (2.3 - 2.4).

**-5-** Ecrou selon la revendication 4, caractérisé en ce que, après mise en place de la fourche, la garniture en materiau élastomère est agencée avec une partie filetée coopérant avec la fourche et assurant son maintien à étanchéité.
